# EUROPEAN PATENT SPECIFICATION

(11) **EP 2 675 042 B1**
(45) Date of publication and mention of the grant of the patent: **04.08.2021**
(21) Application number: 13171563.3
(22) Date of filing: 11.06.2013
(51) Int. Cl.: H02K 5/08, H02K 5/24

(54) **Motor**
Motor
Moteur

(30) Priority: 15.06.2012 KR 20120064172
(43) Date of publication of application: 18.12.2013
(73) Proprietor: LG Innotek Co., Ltd., Seoul, 04637 (KR)
(72) Inventor: Park, Jae Hyun, 100-714 Seoul (KR); Eom, Jae Jun, 100-714 Seoul (KR); Lee, Jun Kyu, 100-714 Seoul (KR); Seo, Ja Young, 100-714 Seoul (KR)
(74) Representative: Plasseraud IP

(56) References cited:
- EP-A2- 2 159 906
- JP-A- H01 138 936
- JP-A- 2007 049 838
- US-A- 3 465 182
- US-A1- 2007 145 842

## Description

### CROSS-REFERENCE TO RELATED APPLICATION

The present application is based on, and claims priority from, Korean Application Number 10-2012-0064172, filed on June 15 2012, and published as KR20130141076 A.

### BACKGROUND OF THE DISCLOSURE

### 1. Field of the Disclosure

The present disclosure relates to a motor having a stator and a rotor.

### 2. Discussion of the Related Art

Generally, almost every vehicle employs an electric power-assist steering system. Such an electric power-assist steering system generates an assist force based on the steering torque and the steering angle, so as to enhance the steering performance of the vehicle.

That is, a steering system that assists a steering force of a vehicle with a separate power is used to enhance the motion stability of a vehicle.

Conventionally, the auxiliary steering device uses hydraulic pressure, but an Electronic Power Steering (EPS) system adapted to transmit a rotation output of an electric motor to a steering shaft via a speed reduction mechanism has been increasingly employed these days from a viewpoint of a reduction in engine load, a reduction in weight, an enhanced steering stability and a quick restoring force.

The EPS system is such that an Electronic Control Unit (ECU) drives a motor in response to steering conditions detected by a speed sensor, a torque angle sensor and a torque sensor to enhance a steering stability and provide a quick restoring force, whereby a driver can safely steer a vehicle.

The EPS system is also such that a motor assists a torque manipulating a steering wheel to allow a driver to steer a vehicle with less power, where the motor employs a Brushless Direct Current (BLDC) motor.

The BLDC motors have been increasingly used because the brushless motors are excellent in maintenance property, have a small size, and are capable of generating a high torque.

The BLDC motor generally forms an exterior look by coupling of a housing and a cover member, an inner circumferential surface of the housing is provided with a stator, and the stator is centrally formed with a rotor rotatably mounted in electrical interaction with the stator. The rotor is rotatably supported by a rotation shaft, and an upper surface of the rotation shaft is connected by a steering shaft of a vehicle to provide a power assisting the steering of the vehicle as mentioned above.

Meanwhile, the cover member is installed at an inside thereof with a PCB (Printed Circuit Board) mounted with a detection sensor provided in the form of a magnetic element. The detection sensor detects a magnetic force of a sensing magnet installed in a rotationally interlocking way with the rotor to learn a current position of the rotor.

In general, the sensing magnet is fixed to an upper surface of a plate installed at an upper surface of the rotor using an adhesive. A rotor position can be detected by coupling the plate to a rotation shaft in response to a magnetic field direction, in a case the sensing magnet is magnetized to the plate.

JP H01 138936 A discloses a motor according to the preamble of claim 1.

However, there may be generated a trembling or a resonance of a stator core due to electromagnetic force generated during rotation of a rotor. The trembling of the stator core by the resonance may result in an increased noise during operation of the motor, an erroneous operation and/or decreased performance.

### BRIEF SUMMARY

The present disclosure is directed to cope with the abovementioned problems/disadvantages and it is an object of the present disclosure to provide a structure-improved motor configured to reduce vibration of a stator core.

A motor according to the invention is defined by the independent claim 1.

Further aspects of the invention are defined by the dependent claims.

In an advantageous effect, a motor according to an exemplary embodiment of the present disclosure can prevent generation of resonance occurring on a stator core to reduce an operational noise of the motor, to prevent occurrence of erroneous operation of the motor caused by resonance of the stator core and to prevent generation of decreased performance.

### BRIEF DESCRIPTION OF THE DRAWINGS

FIG.1 is a cross-sectional view illustrating a motor according to a first exemplary embodiment of the present disclosure and disclosing further aspects of the invention, which is disclosed in the embodiment of Fig. 3.
FIG.2 is a perspective view illustrating a stator core of FIG. 1.
FIG.3 is a cross-sectional view illustrating a motor according to a second exemplary embodiment of the present disclosure disclosing the invention.
FIG.4 is a plan view illustrating a stator core and an insulator according to a third exemplary embodiment of the present disclosure, disclosing further aspects of the invention.

### DETAILED DESCRIPTION

Now, a motor according to the exemplary embodiments of the present disclosure will be described in detail with reference to the accompanying drawings.

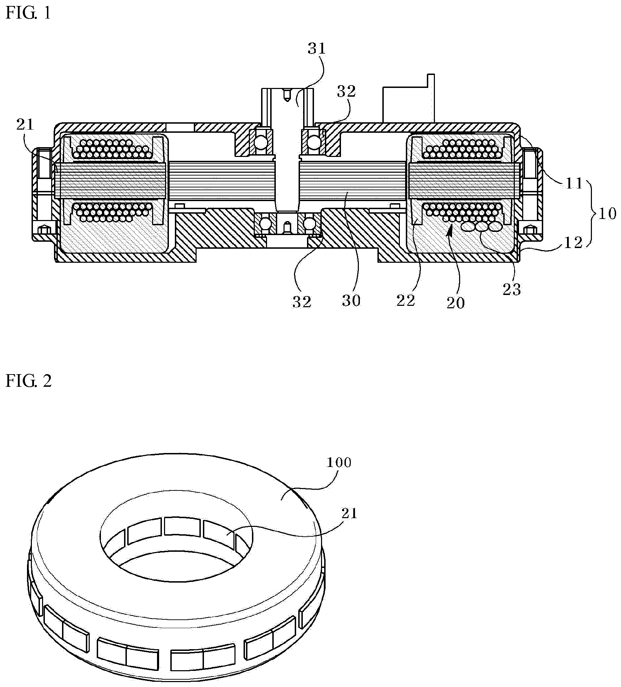

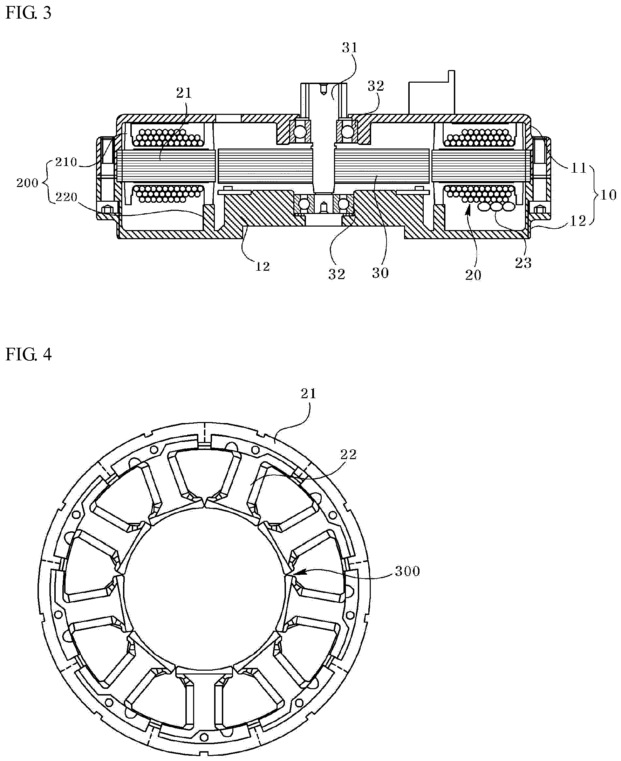

FIG.1 is a cross-sectional view illustrating a motor according to a first exemplary embodiment of the present disclosure, FIG.2 is a perspective view illustrating a stator core of FIG.1, FIG.3 is a cross-sectional view illustrating a motor according to a second exemplary embodiment of the present disclosure, and FIG.4 is a plan view illustrating a stator core and an insulator according to a third exemplary embodiment of the present disclosure.

Referring to FIG.1, the motor includes a housing (10), a stator (20) and a rotor (30). The housing (10) includes an upper housing (11) and a bottom housing (12), and a stator (20) wound with a plurality of coils may be installed inside a space formed by coupling of the upper housing (11) and the bottom housing (12). The stator (20) may include a stator core (21), an insulator (22) and a coil (23).

The stator core (21) may be provided with a block of metal material, and may be formed by stacking a plurality of sheets of core members each formed with a thin plate. The stator core (21) may be protrusively formed with a plurality of teeth facing a surface opposite to the rotor (30) and each tooth is wound with the coil (23).

The insulator (22) may be coupled to an upper surface and a bottom surface of the stator core (21) and serves to prevent the coil (23) wound on the teeth from being electrically conducted with the stator core (21). The insulator (22) may be formed with a resin material.

The rotor (30) is rotatably formed at a center of the stator (20) by a rotation shaft (31). The rotor (30) may be formed by a magnet being coupled to a rotor core, and in some instances, the rotor core and the magnet may be integrally formed.

Both distal ends of the rotation shaft (31) are preferably and rotatably supported by a bearing (32). An upper surface of the rotor (30) may be installed with a plate coupled to a sensing magnet for obtaining position information of the rotor (30), or may be installed with rotor position detecting means similar to the sensing magnet.

The characteristic of the present disclosure lies in a configuration for preventing resonance of the stator (20) installed inside a space of the housing (10), and may be divided into the following exemplary embodiments.

According to a first exemplary embodiment of the present disclosure, the insulator (22)-equipped stator (20) is coated at an outside wound with the coil (23), with an insulation member (100) to allow the outside of the stator (20) to be wrapped with the insulation member (100), as illustrated in FIGS. 1 and 2, and the space of the stator (20) inside the housing (10) may be fully filled with the stator (20) wound with the insulation member (100), as shown in FIG. 1.

According to the configuration thus illustrated, an intrinsic frequency of the stator (20) is changed as the stator (20) is coated with the insulation member (100) to thereby reduce vibration caused by the resonance. In addition, the insulation member (100) wrapping the stator (20) may surface-contact an inner surface of the upper and bottom housings (11, 12) to cause the vibration generated by electromagnetic force of the rotor (30) and the stator (20) to be absorbed by the insulation member (100) and the upper and bottom housings (11, 12). Thus, the vibration of the stator (20) generated in the course of motor operation can be restricted to enhance a reduced noise and operational reliability of a motor.

FIG.3 is a cross-sectional view illustrating a motor according to a second exemplary embodiment of the present disclosure.

Referring to FIG.2, most of the configurations according to the second exemplary embodiment are same as those of the first embodiment, except that shapes of the insulator (22) and the bottom housing (12) are partially changed and a vibration prevention unit (200) is added.

That is, a surface opposite to the upper housing (11) of the insulator (22) is formed with a first pressure rib (210) extensively formed as long as a length capable of surface-contacting an inner surface of the upper housing (11) to allow the first pressure rib (210) to surface-contact all the inner surface of the upper housing (11). In addition, a floor surface facing the insulator (22) of the bottom housing (12) is protrusively formed with a ring-shaped second pressure rib (220) applying a pressure to the insulator (22).

The second pressure rib (220) may be formed at a position corresponding to a floor surface of the insulator (220) wrapping the teeth as illustrated in FIG.3. The present disclosure is not limited thereto. Alternatively, the second pressure rib (220) may be formed at any place configured to support the floor surface of the insulator (22).

According to the configuration thus described, an upper surface of the insulator (22) may surface-contact the upper housing (11) via the first pressure rib (210), and a bottom surface of the insulator (22) may surface-contact the bottom housing (12) via the second pressure rib (220) to reduce the vibration caused by the resonance as the intrinsic frequency of the stator core (21) is changed. Furthermore, the vibration that may be generated by the electromagnetic force of the rotor (30) and the stator (20) may be absorbed by the insulation member (100) and the upper and bottom housings (11, 12) as the inner surface of the upper and bottom housings (11, 12) is surface-contacted with the insulator (22).

Hence, the vibration of the stator (20) that may be generated in the course of motor operation can be restricted to enhance the reduced noise and operational reliability of motor.

FIG.4 is a plan view illustrating a stator core and an insulator according to a third exemplary embodiment of the present disclosure.

Referring to FIG.4, the insulator (22) is configured to wrap the teeth formed at the stator core (21), such that in a case the teeth are wound with the coil (23), the stator core (21) is prevented from being short-circuited.

However, a surface facing the teeth and the rotor (30) is exposed with the teeth of the stator core (21) and each tooth is spaced apart from the other tooth at a predetermined distance. In the third exemplary embodiment of the present disclosure, a contact unit (300) may be formed in which tooth portions of the insulator (22) wrapping the teeth are mutually touched, while maintaining each of the spaced-apart distances of the teeth unchanged.

According to the configuration above mentioned, the insulators (22) wrapping each tooth are mutually connected at the contact unit (300), whereby vibration that may be generated from the stator core (21) can be absorbed by the contact unit (300) of the insulator (22) to reduce the vibration that may be generated in the course of motor operation.

Although embodiments have been described with reference to a number of illustrative embodiments thereof, it should be understood that numerous other modifications and embodiments can be devised by those skilled in the art that will fall within the scope of protection, which is defined by the appended claims.

## Claims

1. A motor, comprising:
a housing (10) including an upper housing (11) and a bottom housing (12);
a stator (20) mounted on the housing (10) and including a stator core (21) having a plurality of teeth, an insulator (22) and a coil (23);
a rotor (30) rotatably installed at a center of the stator (20) by a rotation shaft (31);
a vibration prevention unit installed between the stator (20) and the housing (10); and
an insulation member (100) wrapping an entire surface of the stator core (21) except for a surface opposite to the rotor (30) of the stator (20), **characterized in that** the vibration prevention unit (200) includes a pair of first pressure ribs (210) extensively formed at the insulator (22) for surface-contacting an inner surface of the upper housing (11) and a second pressure rib (220) formed at a floor surface facing the insulator (22) of the bottom housing (12) to apply a pressure to the insulator (22).

2. The motor of claim 1, **characterized in that** the insulation member (100) is formed with any one of a rubber, silicone and an epoxy molding.

3. The motor of claim 1 or 2, **characterized in that** the stator (20) coated at an outside with insulation member (100) takes a shape of a ring flat at an upper surface and a bottom surface.

4. The motor of any one of claims 1 to 3, **characterized in that** the pair of first pressure ribs (210) is interposed between the insulator (22) and the upper housing (11) to apply pressure to the insulator (22), and the second pressure rib (220) is interposed between the insulator (22) and the bottom housing (12) to apply a pressure to the insulator (22).

5. The motor of claim 4, **characterized in that** an upper surface of the insulator (22) surface-contacts the upper housing (11) via the pair of first pressure ribs (210) and a bottom surface of the insulator (22) surface-contacts the bottom housing (12) via the second pressure rib (220).

6. The motor of claim 4, **characterized in that** the pair of first pressure ribs (210) is integrally formed as long as a length capable of surface-contacting the inner surface of the upper housing (11) at a surface of the insulator (22).

7. The motor of claim 4, **characterized in that** the second pressure rib (220) is protrusively formed at the floor surface opposite to the insulator (22) of the bottom housing (12) to support a bottom surface of the insulator (22).

8. The motor of any one of claims 1 to 7, further **characterized by** a contact unit (300) formed by mutual connection of each distal end of a tooth portion of the insulator (22) wrapping the tooth of the stator core (21), such that vibration of the stator core (21) is absorbed by the contact unit (300).

9. The motor of any one of claims 1 to 8, **characterized in that** the stator core (21) is formed with a block of metal material.

10. The motor of any one of claims 1 to 8, **characterized in that** the stator core (21) is formed by stacking a plurality of sheets of core members, each formed with a thin plate.

11. The motor of any one of claims 1 to 10, **characterized in that** the insulator (22) is coupled to the upper surface and the bottom surface of the stator core (21) and serves to prevent the coil (23) wound on the teeth from being electrically conducted with the stator core (21).

12. The motor of claim 11, **characterized in that** the insulator (22) is formed with a resin material.

13. The motor of any one of claims 1 to 12, **characterized in that** the pair of first pressure ribs includes an inner rib and an outer rib spaced apart from the inner rib.

14. The motor of claim 13, **characterized in that** upper ends of the inner rib and the outer rib are brought into contact with the upper housing, respectively and a lower end of the inner rib contacts the second pressure rib.

15. The motor of claim 13, **characterized in that** the inner rib and the outer rib form a space in which the coil is wound.

## Patentansprüche

1. Motor, der aufweist:
ein Gehäuse (10), das ein oberes Gehäuse (11) und ein unteres Gehäuse (12) umfasst;
einen Stator (20), der auf dem Gehäuse (10) montiert ist und einen Statorkern (21) mit mehreren Zähnen, einen Isolator (22) und eine Spule (23) umfasst;
einen Rotor (30), der an einer Mitte des Stators (20) durch eine Drehwelle (31) drehbar installiert ist;
eine Schwingungsverhinderungseinheit, die zwischen dem Stator (20) und dem Gehäuse (10) installiert ist; und
ein Isolierelement (100), das die gesamte Oberfläche des Statorkerns (21), abgesehen von einer Oberfläche, die dem Rotor (30) des Stators (20) entgegengesetzt ist, umhüllt, **dadurch gekennzeichnet, dass** das Schwingungsverhinderungselement (200) ein Paar erster Druckrippen (210), die an dem Isolator (22) ausgedehnt ausgebildet sind, um eine Innenoberfläche des oberen Gehäuses (11) zu kontaktieren, und eine zweite Druckrippe (220), die an einer dem Isolator (22) des unteren Gehäuses (12) zugewandten Bodenoberfläche ausgebildet ist, um einen Druck auf den Isolator (22) anzuwenden, umfasst.

2. Motor nach Anspruch 1, **dadurch gekennzeichnet, dass** das Isolierelement (100) beliebig aus Gummi-, Silikon- oder einer Epoxid-Ausformung ausgebildet ist.

3. Motor nach Anspruch 1 oder 2, **dadurch gekennzeichnet, dass** der Stator (20), der auf einer Außenseite mit dem Isolierelement (100) überzogen ist, eine Form eines Rings annimmt, der an einer oberen Oberfläche und einer unteren Oberfläche flach ist.

4. Motor nach einem der Ansprüche 1 bis 3, **dadurch gekennzeichnet, dass** das Paar erster Druckrippen (210) zwischen dem Isolator (22) und dem oberen Gehäuse (11) eingefügt ist, um Druck auf den Isolator (22) anzuwenden, und die zweite Druckrippe (220) zwischen dem Isolator (22) und dem unteren Gehäuse (12) eingefügt ist, um Druck auf den Isolator (22) anzuwenden.

5. Motor nach Anspruch 4, **dadurch gekennzeichnet, dass** eine obere Oberfläche des Isolators (22) über das Paar erster Druckrippen (210) das obere Gehäuse (11) kontaktiert und eine untere Oberfläche des Isolators (22) über die zweite Druckrippe (220) das untere Gehäuse (12) oberflächenkontaktiert.

6. Motor nach Anspruch 4, **dadurch gekennzeichnet, dass** das Paar erster Druckrippen (210) so lange integral ausgebildet ist wie eine Länge, die fähig ist, die Innenoberfläche des oberen Gehäuses (11) an einer Oberfläche des Isolators (22) oberflächenzukontaktieren.

7. Motor nach Anspruch 4, **dadurch gekennzeichnet, dass** die zweite Druckrippe (220) an der Bodenoberfläche entgegengesetzt zu dem Isolator (22) des unteren Gehäuses (22) vorstehend ausgebildet ist, um eine untere Oberfläche des Isolators (22) zu halten.

8. Motor nach einem der Ansprüche 1 bis 7, der ferner durch eine Kontakteinheit (300) gekennzeichnet ist, die durch wechselseitige Verbindung jedes distalen Endes eines Zahnabschnitts des Isolators (22), der den Zahn des Statorkerns (21) umhüllt, ausgebildet ist, so dass die Schwingung des Statorkerns (21) durch die Kontakteinheit (300) absorbiert wird.

9. Motor nach einem der Ansprüche 1 bis 8, **dadurch gekennzeichnet, dass** der Statorkern (21) aus einem Block aus Metallmaterial ausgebildet ist.

10. Motor nach einem der Ansprüche 1 bis 8, **dadurch gekennzeichnet, dass** der Statorkern (21) durch Stapeln mehrerer Lagen von Kernelementen ausgebildet ist, von den jede aus einer dünnen Platte ausgebildet ist.

11. Motor nach einem der Ansprüche 1 bis 10, **dadurch gekennzeichnet, dass** der Isolator (22) mit der oberen Oberfläche und der unteren Oberfläche des Statorkerns (21) gekoppelt ist und dazu dient, um zu verhindern, dass die auf die Zähne gewickelte Spule elektrisch leitend mit dem Statorkern (21) wird.

12. Motor nach Anspruch 11, **dadurch gekennzeichnet, dass** der Isolator (22) aus einem Harzmaterial ausgebildet ist.

13. Motor nach einem der Ansprüche 1 bis 12, **dadurch gekennzeichnet, dass** das Paar erster Druckrippen eine Innenrippe und eine von der Innenrippe beabstandete Außenrippe umfasst.

14. Motor nach Anspruch 13, **dadurch gekennzeichnet, dass** obere Enden der Innenrippe und der Außenrippe jeweils in Kontakt mit dem oberen Gehäuse gebracht sind und ein unteres Ende der Innenrippe die zweite Druckrippe kontaktiert.

15. Motor nach Anspruch 13, **dadurch gekennzeichnet, dass** die Innenrippe und die Außenrippe einen Raum bilden, in dem die Spule gewickelt ist.

## Revendications

1. Moteur, comprenant :
un logement (10) incluant un logement supérieur (11) et un logement inférieur (12) ;
un stator (20) monté sur le logement (10) et incluant un noyau de stator (21) ayant une pluralité de dents, un isolant (22) et une bobine (23) ;
un rotor (30) installé pivotant en un centre du stator (20) par un arbre de rotation (31) ;
une unité de prévention de vibrations installée entre le stator (20) et le logement (10) ; et
un organe d'isolation (100) enveloppant une surface complète du noyau de stator (21) à l'exception d'une surface à l'opposé du rotor (30) du stator (20),
**caractérisé en ce que** l'unité de prévention de vibrations (200) inclut une paire de premières nervures de pression (210) formées extensivement au niveau de l'isolant (22) pour un contact de surface avec une surface intérieure du logement supérieur (11) et une seconde nervure de pression (220) formée à une surface de plancher faisant face à l'isolant (22) du logement inférieur (12) pour appliquer une pression à l'isolant (22).

2. Moteur selon la revendication 1, **caractérisé en ce que** l'organe d'isolation (100) est formé avec un quelconque parmi un caoutchouc, une silicone et un moulage époxy.

3. Moteur selon la revendication 1 ou 2, **caractérisé en ce que** le stator (20) extérieurement revêtu de l'organe d'isolation (100) prend une forme d'un anneau plat au niveau d'une surface supérieure et d'une surface inférieure.

4. Moteur selon l'une quelconque des revendications 1 à 3, **caractérisé en ce que** la paire de premières nervures de pression (210) est interposée entre l'isolant (22) et le logement supérieur (11) pour appliquer une pression à l'isolant (22), et la seconde nervure de pression (220) est interposée entre l'isolant (22) et le logement inférieur (12) pour appliquer une pression à l'isolant (22).

5. Moteur selon la revendication 4, **caractérisé en ce qu'**une surface supérieure de l'isolant (22) est en contact de surface avec le logement supérieur (11) via la paire de premières nervures de pression (210) et une surface inférieure de l'isolant (22) est en contact de surface avec le logement inférieur (12) via la seconde nervure de pression (220).

6. Moteur selon la revendication 4, **caractérisé en ce que** la paire de premières nervures de pression (210) est formée intégralement aussi longue qu'une longueur capable d'un contact de surface avec la surface intérieure du logement supérieur (11) au niveau d'une surface de l'isolant (22).

7. Moteur selon la revendication 4, **caractérisé en ce que** la seconde nervure de pression (220) est formée saillante au niveau de la surface de plancher à l'opposé de l'isolant (22) du logement inférieur (12) pour supporter une surface inférieure de l'isolant (22).

8. Moteur selon l'une quelconque des revendications 1 à 7, **caractérisé en outre par** une unité de contact (300) formée par une liaison réciproque de chaque extrémité distale d'une portion de dent de l'isolant (22) enveloppant la dent du noyau de stator (21), de sorte qu'une vibration du noyau de stator (21) soit absorbée par l'unité de contact (300).

9. Moteur selon l'une quelconque des revendications 1 à 8, **caractérisé en ce que** le noyau de stator (21) est formé avec un bloc de matériau métallique.

10. Moteur selon l'une quelconque des revendications 1 à 8, **caractérisé en ce que** le noyau de stator (21) est formé par empilement d'une pluralité de feuilles d'organes de noyau, chacune étant formée avec une plaque mince.

11. Moteur selon l'une quelconque des revendications 1 à 10, **caractérisé en ce que** l'isolant (22) est couplé à la surface supérieure et à la surface inférieure du noyau de stator (21) et sert à empêcher que la bobine (23) enroulée sur les dents ne soit électriquement conductrice avec le noyau de stator (21).

12. Moteur selon la revendication 11, **caractérisé en ce que** l'isolant (22) est formé avec un matériau de résine.

13. Moteur selon l'une quelconque des revendications 1 à 12, **caractérisé en ce que** la paire de premières nervures de pression inclut une nervure intérieure et une nervure extérieure espacée de la nervure intérieure.

14. Moteur selon la revendication 13, **caractérisé en ce que** des extrémités supérieures de la nervure intérieure et de la nervure extérieure sont respectivement mises en contact avec le logement supérieur et une extrémité inférieure de la nervure intérieure est en contact avec la seconde nervure de pression.

15. Moteur selon la revendication 13, **caractérisé en ce que** la nervure intérieure et la nervure extérieure forment un espace dans lequel la bobine est enroulée.
